# EUROPÄISCHE PATENTSCHRIFT

(11) **EP 1 369 267 B1**
(45) Veröffentlichungstag und Bekanntmachung des Hinweises auf die Patenterteilung: **04.03.2009**
(21) Anmeldenummer: 03009693.7
(22) Anmeldetag: 30.04.2003
(51) Int. Cl.: B60G 15/12, B60G 11/26, B60G 15/14, B60G 3/01, F16F 9/084

(54) **Hydrofederbein mit Führung**
Hydraulic suspension strut with guidance
Jambe de suspension hydraulique avec guidage

(30) Priorität: 05.06.2002 DE 10224869
(43) Veröffentlichungstag der Anmeldung: 10.12.2003
(73) Patentinhaber: Daimler AG, 70327 Stuttgart (DE)
(72) Erfinder: Georgi, Andreas, 01159 Dresden (DE); Gönnheimer, Peter, 71384 Weinstadt (DE); Luncz, Helmut, 70825 Korntal-Münchingen (DE)

(56) Entgegenhaltungen:
- DE-A1- 1 405 372
- DE-A1- 4 310 548
- DE-A1- 10 024 571
- DE-A1- 19 939 969
- FR-A- 2 733 563
- US-A- 3 604 725

## Beschreibung

Die Erfindung betrifft ein Feder-Dämpfersystem eines McPherson-Federbeins zur Abstützung eines Rades an einem Fahrzeugaufbau, das ein Außenrohr und einen in diesem geführten Kolben umfasst, wobei der obere Teil des Federbeins am Fahrzeugaufbau gelenkig gelagert ist, während der untere Teil einen Radträger oder einen Achszapfen zur Lagerung eines Rades umfasst und mittels mindestens eines zumindest einteiligen Lenkers am Fahrzeugaufbau abgestützt ist.

Bei einem McPherson-Federbein ist der Achszapfen oder der Radträger, auf dem sich das Rad dreht, meist fest mit dem Außenrohr eines Dämpfers verbunden. Zumindest das Außenrohr schwenkt in der Regel beim Lenken mit dem Rad. DE-A-1 405 732 zeigt ein Feder-Dämpfersystem nach Oberbegriff des Anspruchs 1 mit einer Längsführung.

Aus der DE 27 59 435 C2 ist eine Luftfeder mit Differenzrollbalg bekannt. Diese verfügt über eine zentral angeordnete Längsführung. Der eine Führungsteil ist hierbei am Rad, der andere am Fahrzeugaufbau angeordnet. Jeweils ein Ende des Schlauchrollbalgs ist mit der fahrzeugaufbauseitigen und das andere Ende mit der radseitigen Befestigung verbunden. Beim Einsatz dieser Luftfeder in einem radtragenden Federbein werden beim Lenken der Räder die beiden Balgenden eines jeden Schlauchrollbalgs gegeneinander tordiert. Die Funktion der Feder wird dadurch beeinträchtigt. Die Torsion kann auch zu Beschädigungen der Schlauchrollbälge führen.

DE-A-10024571 zeigt ein Feder-Dämpfersystem mit Differenzrollbalg und Hydrospeicher.

Der vorliegenden Erfindung liegt daher die Problemstellung zugrunde, ein Federbein mit einem hydraulischen oder pneumatischen Feder- und/oder Dämpfersystem zu entwickeln.

Diese Problemstellung wird mit den Merkmalen des Hauptanspruches gelöst. Dazu ist das Außenrohr eine Außenglocke und der Kolben ist ein Abrollkolben. Zwischen der Außenglocke und dem Abrollkolben ist mindestens ein Schlauchrollbalg angeordnet. Außerdem ist zwischen der Außenglocke und dem Abrollkolben zur gegenseitigen Längsführung mindestens ein getriebetechnisches Schiebepaar angeordnet. Die Außenglocke, der Abrollkolben und der Schlauchrollbalg begrenzen zumindest abschnittsweise einen Balgraum.

Der Schlauchrollbalg ist sowohl an der Außenglocke als auch am Abrollkolben befestigt. Mit der Außenglocke und dem Abrollkolben begrenzt er einen Balgraum. Dieser ist beispielsweise mit Gas oder mit einem hydraulischen Fluid befüllt. Während des Betriebes rollt der Schlauchrollbalg auf Abrollflächen des Abrollkolbens und der Außenglocke ab.

Das Schiebepaar zwischen der Außenglocke und dem Abrollkolben ist eine Paarung aus mindestens zwei Teilen zur gegenseitigen gleit- und/oder wälzgelagerten Längsführung mit nur einem Freiheitsgrad. Dieser Freiheitsgrad ist in Längsrichtung des Federbeins orientiert. Wird eines der beiden Teile beispielsweise um seine Längsachse gedreht, nimmt es das andere Teil mit. Bei Lenkbewegungen des Rades werden beide Teile des Schiebepaares um den gleichen Winkel gedreht. Die Übertragung dieser Drehbewegung erfolgt winkelgetreu.

Der beispielsweise radiale Abstand der Außenglocke und des Abrollkolbens bleibt hierbei konstant. Der Schlauchrollbalg zwischen den beiden Teilen wird bei einer derartigen Drehbewegung nicht verformt. Es besteht keine Gefahr der Torsion und einer hierdurch verursachten Beschädigung des Schlauchrollbalges.

Diese Anordnung kann neben dem McPherson-Federbein z.B. auch in einer Kurbelschleifenachse oder einer anderen vergleichbaren Achse eingesetzt werden.

Zur Längsführung des Federbeins kann das Schiebepaar z.B. mit einem Zylinderpaar kombiniert sein. Letzteres ist eine Paarung aus mindestens zwei Teilen zur gegenseitigen gleitund/oder wälzgelagerten Führung mit einem Längs- und einem Drehfreiheitsgrad, das für sich alleine ein Verdrehen der Außenglocke zum Abrollkolben nicht verhindern kann. Durch diese Kombination wird ggf. eine lagertechnische Überbestimmung vermieden.

In einer derartigen Gasfeder kann zum Beispiel ein hydraulischer Stoßdämpfer integriert sein. Hierbei kann die Feder und der Dämpfer parallel oder hintereinander geschaltet sein.

Eine hydraulische Feder kann beispielsweise mittels eines an den Balgraum über eine Drosselstelle angeschlossenen Hydrospeichers zu einem Feder-Dämpfersystem gestaltet werden. Hierbei kann der Hydrospeicher sowohl innerhalb als auch außerhalb der Feder angeordnet sein. Diese Ausführung des Feder-Dämpfersystems eines Federbeins wird im Folgenden als Hydrofederbein bezeichnet.

Weitere Einzelheiten der Erfindung ergeben sich aus den Unteransprüchen und der nachfolgenden Beschreibung schematisch dargestellter Ausführungsformen.
- Figur 1:: Hydrofederbein mit Differenzrollbalg und zwei außerhalb des Balgraums angeordneten Lagerstellen;
- Figur 2:: Schnitte durch das Hydrofederbein nach Figur 1 in Höhe der Lagerstellen;
- Figur 3:: Hydrofederbein mit zwei Lagerstellen, von denen eine innerhalb des Balgraums angeordnet ist;
- Figur 4:: Hydrofederbein mit einem Rollbalg und zwei im Balgraum angeordneten Lagerstellen.

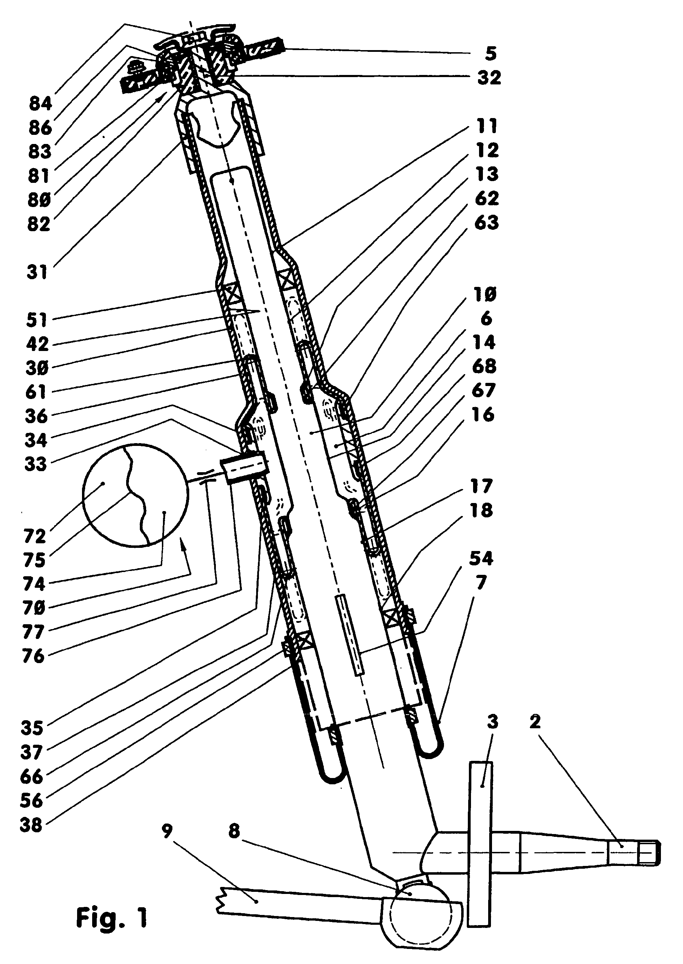

Die Figur 1 zeigt ein radtragendes Hydrofederbein, das ein hier nicht dargestelltes beispielsweise gelenktes Rad am Fahrzeugaufbau (5) abstützt. Zur Aufnahme des Rades dient beispielsweise ein am unteren Ende des Hydrofederbeins angeordneter Achszapfen (2).
Das Hydrofederbein ist an seinem oberen Ende im Fahrzeugaufbau (5) mittels einer gelenkigen Lagerung (80) gelagert. Die Figur 1 zeigt das Hydrofederbein beispielsweise in der Konstruktionslage. An seinem unteren Ende ist es z.B. über einen Querlenker (9) am Fahrzeugaufbau (5) abgestützt. Ein vorhandener Spurhebel und die dazugehörende Spurstange sind nicht dargestellt.

Das Hydrofederbein umfasst einen Abrollkolben (10) und eine Außenglocke (30). Hierbei ist z.B. am Abrollkolben (10) der Achszapfen (2) und ein Bremsträger (3) befestigt, während die Außenglocke (30) mittels einer Bodenbüchse (31) in der gelenkigen Lagerung (80) gelagert ist. Zwischen dem Abrollkolben (10) und der Außenglocke (30) sind beispielsweise zwei Schlauchrollbälge (61, 66) angeordnet. Der Abrollkolben (10), die Schlauchrollbälge (61, 66) und die Außenglocke (30) sind Begrenzungen eines Balgraumes (6), der mit einem Hydrospeicher (70) über eine Drosselstelle (77) kommuniziert.

Zwischen dem Abrollkolben (10) und der Außenglocke (30) sind beispielsweise außerhalb des Balgraums (6) zwei Lagerstellen (51, 56) angeordnet. Diese Lagerstellen (51, 56) bilden Längsführungen des Abrollkolbens (10) in der Außenglocke (30).

Der Abrollkolben (10) ist ein mehrstufiger Kolben mit sich beispielsweise von unten nach oben verjüngenden Durchmesserbereichen. Der obere Bereich des Abrollkolbens (10) ist beispielsweise ein oberer Führungsbereich (11), an den sich nach unten hin ein beispielsweise zylindrischer oberer Abrollbereich (12) anschließt. Dieser obere Abrollbereich (12) wird nach unten hin begrenzt durch einen oberen Befestigungsbereich (13), in dem der obere Schlauchrollbalg (61) am Abrollkolben (10) mittels eines Spannringes (62) befestigt ist. An diesen Bereich (13) schließt sich ein zylindrischer Bereich (14) an, der u.a. den Balgraum (6) begrenzt. Nach unten hin schließt sich hieran ein unterer Befestigungsbereich (16), an dem der untere Schlauchrollbalg (66) am Abrollkolben (10) fixiert ist. Der Durchmesser dieses Bereichs (16) und des sich nach unten hin anschließenden unteren Abrollbereichs (17) ist beispielsweise größer als der Durchmesser des oberen Abrollbereichs (12). Der beispielsweise zylindrische untere Abrollbereich (17) geht nach unten hin über in einen unteren Führungsbereich (18). Am unteren Ende des Abrollkolbens (10) ist der Achszapfen (2), der nicht dargestellte Spurhebel und eine Gelenkkugel (8) zur Abstützung über den Lenker (9) angeordnet.

Der Abrollkolben (10) kann innen hohl ausgeführt sein, ggf. sind im Bereich des Balgraumes (6) Durchbrüche zur Verbindung des Kolbeninnenraumes mit dem Balgraum (6) vorhanden.

Die Außenglocke (30) ist ein mehrfach gestuftes Rohr mit beispielsweise zylindrischen Abschnitten. In Figur 1 ist sie an ihrem oberen Ende durch eine Bodenbüchse (31) verschlossen. Das untere Ende (38), hier ist der Durchmesser der Außenglocke (30) größer als am oberen Ende, ist offen.

Im mittleren Bereich der Außenglocke (30) sind an deren Innenwandung (42) der obere (61) und der untere Schlauchrollbalg (66) beispielsweise mittels Spannringen (63, 68) befestigt. Zwischen diesen beiden Befestigungsbereichen (34, 35) durchdringt eine Verbindungsleitung (76) zum Hydrospeicher (70) die Außenglocke (30).

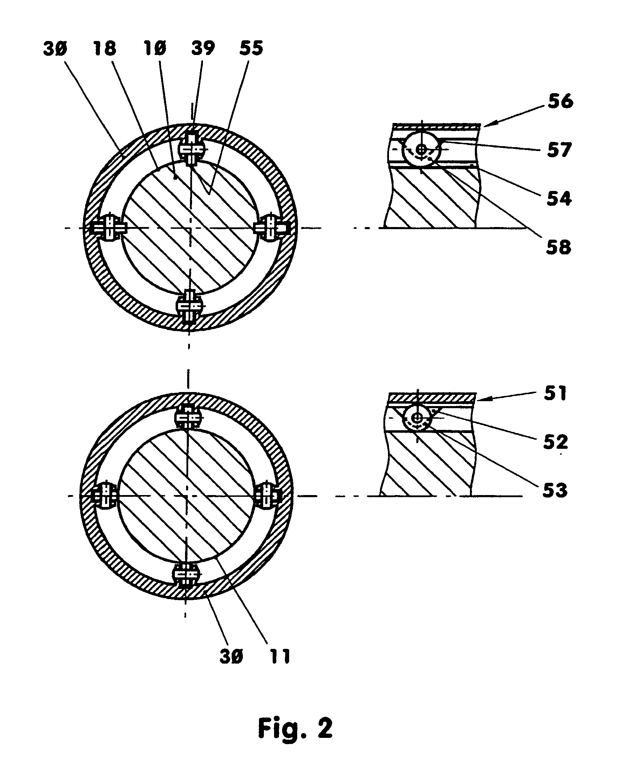

An die Befestigungsbereiche (34, 35) schließt sich nach oben und unten jeweils ein Abrollbereich (36, 37) für den oberen (61) und den unteren Schlauchrollbalg (66) an. Hierbei ist der Durchmesser des oberen Abrollbereiches (36) beispielsweise geringer als der Durchmesser des unteren Abrollbereiches (37). Beispielsweise unmittelbar außerhalb der Abrollbereiche (36, 37) sind an der Innenwandung (42) der Außenglocke (30) Führungselemente (52, 53, 57, 58) angeordnet, vgl. Figur 2. Diese sind beispielsweise jeweils vier an der Innenwandung (42) der Außenglocke (30) verteilte Rollenböcke (52, 57), deren Rollen (53, 58) auf der jeweiligen Gegenführung, den Führungsbereichen (11, 18) des Abrollkolbens (10), abwälzen. Hierbei liegen die Achsen der Rollen (53, 58) quer zur Längsachse der Außenglocke (30) und des Abrollkolbens (10). Beispielsweise liegen alle Achsen in einer Ebene.

In der oberen Längsführung (51) ist der obere Führungsbereich (11) des Abrollkolbens (10) zylindrisch ausgebildet. Bei einer Relativbewegung der Außenglocke (30) zum Abrollkolben (10) wälzen die Rollen (53) auf dem oberen Führungsbereich (11) ab. Diese Führung (51) wird im Folgenden auch als Loslager (51) bezeichnet.

In der unteren Längsführung (56) trägt der untere Führungsbereich (18) des Abrollkolbens (10) Längsnuten (54), vgl. Figur 2. Die Breite dieser Längsnuten (54) ist geringfügig breiter als die Breite einer Rolle (58). Die Längsnuten (54) sind so am Umfang des Abrollkolbens (10) angeordnet, dass ihre Teilung mit der Teilung der Rollen (58) übereinstimmt. Die Länge der Längsnuten (54) entspricht zumindest der Länge des Federbeinhubs. Der Nutgrund (55) ist hierbei parallel zur Längsachse des Abrollkolbens (10). Bei einer Relativbewegung der Außenglocke (30) zum Abrollkolben (10) werden die Rollen (58) an den Flanken dieser Längsnuten (54) geführt. Diese untere Längsführung (56) verhindert so ein Verdrehen der Außenglocke (30) relativ zur Längsachse des Abrollkolbens (10). Sie wird im folgenden auch als Festlager (56) bezeichnet.

Ggf. trägt die Innenwandung (42) der Außenglocke (30) im Bereich der Rollen (53, 58) Aussparungen (39), vgl. Figur 2.

Die Schlauchrollbälge (61, 66) sind als Differenzrollbälge ausgebildet. Die Durchmesser der Abrollbereiche (12, 36) des oberen Schlauchrollbalgs (61) auf dem Abrollkolben (10) und in der Außenglocke (30) sind beispielsweise geringer als die entsprechenden Durchmesser der Abrollbereiche (17, 37), an denen der untere Schlauchrollbalg (66) anliegt.

Beide Schlauchrollbälge (61, 66) begrenzen zusammen mit dem Balgbereich (14) des Abrollkolbens (10) und der Außenglocke (30) den Balgraum.

Die Bodenbüchse (31) der Außenglocke (30) trägt z.B. eine nach oben gerichteten Gewindestange (32). Auf der Gewindestange (32) ist die gelenkige Lagerung (80) angeordnet. Diese umfasst einen Elastomerkörper (82), der u.a. ein Wälzlager (81), beispielsweise ein Axiallager in Form eines 4-Punkt-Drahtlagers, trägt. Oberhalb des Wälzlagers (81) ist beispielsweise ein weiterer Elastomerkörper (83) angeordnet. Die gelenkige Lagerung (80) ist z.B. in ein Karosserieblech des Fahrzeugaufbaus (5) eingesetzt und mittels einer Sechskantmutter (84) und eines Sicherungsbleches (86) gesichert.

Der offene Spalt zwischen dem unteren Ende (38) der Außenglocke (30) und dem Abrollkolben (10) ist beispielsweise mit einem Schutzbalg (7) z.B. gegen Verschmutzung verschlossen.

Der Hydrospeicher (70) verfügt über eine Membran (75), die ein Gaspolster (72) von einem Fluidraum (74) trennt. In der Verbindungsleitung (76), die den Hydrospeicher (70) mit dem Balgraum (6) verbindet, ist die Drosselstelle (77) angeordnet. Diese besteht beispielsweise aus zwei einander entgegengesetzt wirkenden Druckstufenventilen in Form von Federplattenventilen (77). Jeweils ein Ventil (77) öffnet in eine Strömungsrichtung. Hierbei kann die Drosselwirkung des einzelnen Drosselrückschlagventils (77) ggf. mittels eines steuer- oder regelbaren Antriebs verstellbar ausgeführt werden. Der Hydrospeicher (70) kann am Gaspolster (72) und/oder am Fluidraum (74) einen Anschluss für die Gas- bzw. Fluidzufuhr haben.

Der Balgraum (6) und der Fluidraum (74) des Hydrospeichers (70) sind mit einem hydraulischen Fluid befüllt. Das Gaspolster (72) des Hydrospeichers (70) ist in der Regel mit einem Druck vorgespannt, der höher ist als der normale Atmosphärendruck.

Beim Betrieb des Fahrzeuges wirkt der Hydrospeicher (70) mit der Drosselstelle (77) als Feder- und Dämpferelement. Die hydraulische Flüssigkeit strömt beim Einfedern eines Rades - der Abrollkolben (10) bewegt sich relativ zur Außenglocke (30) nach oben - gedrosselt an der Drosselstelle (77) aus dem Balgraum (6) in den Hydrospeicher (70). Das Gaspolster (72) wird komprimiert und baut hierbei eine Gegenkraft auf, die die hydraulische Flüssigkeit wieder aus dem Hydrospeicher (70) gedrosselt in den Balgraum (6) fördert.

Beim Ausfedern eines Rades - der Abrollkolben (10) bewegt sich relativ zur Außenglocke (30) nach unten - ist die Strömungsrichtung des hydraulischen Fluids umgekehrt.

Beim Fahren des Fahrzeuges verursachen z.B. Beschleunigungsund Seitenkräfte Biegemomente in der Radaufhängung und damit auch im Abrollkolben (10). Diese Biegemomente stützen sich über die beiden Führungen (51, 56) an der Außenglocke (30) ab. Das Verhältnis des Abstandes der beiden Führungen (51, 56) zum Abstand einer Führung (51, 56) und dem Kraftangriffspunkt sowie der Spreizungswinkel des Hydrofederbeins zur Vertikalen bestimmt dabei die Lastverteilung in den Führungen (51, 56). Von der Außenglocke (30) werden die Kräfte über die gelenkige Lagerung (80) an den Fahrzeugaufbau (5) übertragen.

Die Längskräfte auf das Rad verursachen auch ein Drehmoment des Rades um die Mittelachse des Hydrofederbeins. Diese werden z.B. über die nicht dargestellten Spurhebel abgestützt.

Auf das Rad wirkende Querkräfte, die beispielsweise bei Kurvenfahrten auftreten, werden als Biegemomente über die Führungen (51, 56) übertragen.

Sind die Hydrofederbeine an den gelenkten Rädern eines Fahrzeuges angeordnet, bildet z.B. die Mittelachse des Hydrofederbeins bei Lenkbewegungen die Schwenkachse des Rades.

Wird das Rad beispielsweise nach rechts gelenkt, schwenkt in der Draufsicht das Rad, der Achszapfen (2) und der Abrollkolben (10) gemeinsam beispielsweise im Uhrzeigersinn um die Mittelachse des Abrollkolbens (10).

In der unteren Führung (56), dem Festlager (56), werden über die Führungsnuten (54) des Abrollkolbens die Rollen (58) zwangsweise mitgeschwenkt. Mit den Rollen (58) werden die Rollenböcke (57) und die Außenglocke (30) mitgenommen. Letztere wird während des Schwenkens im Schwenklager (80) geführt.

Die Schlauchrollbälge (61, 66) behalten beim ungefederten Lenken ihre Lage relativ zum Abrollkolben (10) und zur Außenglocke (30) bei. Da sich beim Lenken der Abrollkolben (10) relativ zur Außenglocke (30) nicht verdreht, werden die Schlauchrollbälge (61, 66) nicht tordiert.

Auch bei einer Lenkbewegung in die Gegenrichtung wird die Außenglocke (30) mittels des Festlagers (56) vom Abrollkolben (10) mitgenommen.

Der Abrollkolben (10) und die Außenglocke (30) können z.B. auch konische Bereiche oder Absätze aufweisen. Auch können die Schlauchrollbälge (61, 66) an separaten Führungsteilen, die in der Außenglocke (30) oder am Abrollkolben (10) angeordnet sind, abrollen. Beide Bauteile (10, 30) können auch mehrteilig ausgeführt sein.

Das Festlager (56) kann auch oben und das Loslager (51) unten angeordnet sein. Auch können beide Lager (51, 56) als Festlager (56) ausgebildet sein. Diese Lager können beispielsweise Linearführungen, Gleitlager, Kugelumlaufführungen, etc. oder Kombinationen dieser Lagerelemente sein.

Selbstverständlich kann das Hydrofederbein auch umgekehrt eingebaut sein. Der Abrollkolben (10) sitzt dann am Fahrzeugaufbau (5), während der Radzapfen (3) an der Außenglocke (30) angeordnet ist.

Der Hydrospeicher (70) kann außerhalb oder innerhalb des Hydrofederbeines sitzen. Hierbei können auch mehrere Hydrospeicher (70) am oder im Hydrofederbein angeordnet sein.

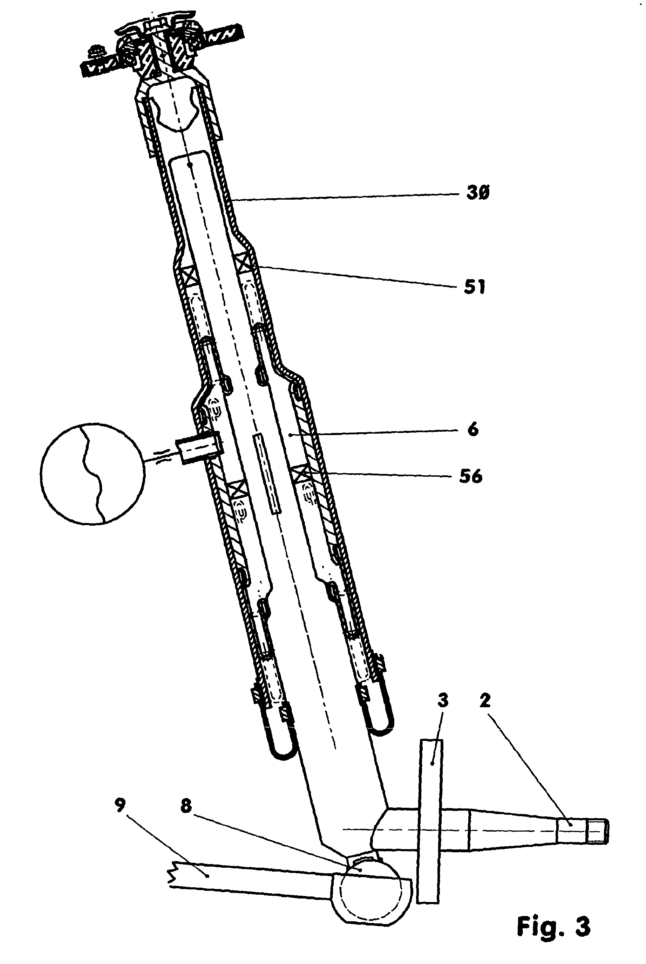

Die Figur 3 zeigt ein Hydrofederbein, bei dem beispielsweise das Festlager (56) innerhalb des Balgraumes (6) und ein Loslager (51) außerhalb des Balgraumes (6) angeordnet ist. Beide Lager (51, 56) sind hierbei beispielsweise an der Außenglocke (30) befestigt. Auch in diesem Ausführungsbeispiel kann das untere und/oder das obere Lager als Festlager (56) ausgebildet sein. Die Lagerstelle innerhalb des Balgraums (6) trennt diesen in zwei Teile. Das hydraulische Fluid kann über einen Spaltraum zwischen den beiden Teilen ausgetauscht werden. Ggf. kann auch Öl durch den Abrollkolben (10) und/oder durch die Außenglocke (30) ausgetauscht werden.

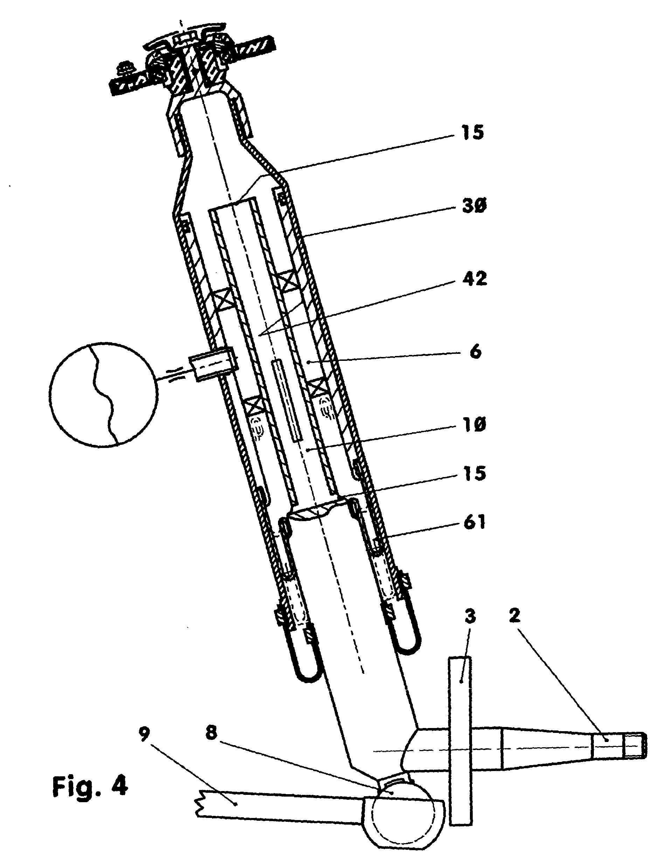

Die Figur 4 zeigt ein Hydrofederbein mit einem einzelnen Schlauchrollbalg (61). Der Abrollkolben (10) ist zumindest bereichsweise mit hydraulischem Fluid befüllt. Die Außenglocke (30) ist beispielsweise konzentrisch zum Abrollkolben (10) angeordnet. Die Innenwandung (42) der Außenglocke (30) verläuft parallel zur Außenfläche des Abrollkolbens (10). Der Balgraum (6) wird durch die Außenglocke (30), den Abrollkolben (10) und den Schlauchrollbalg (61) begrenzt. Die obere (51) und die untere Führung (56) sind hier innerhalb des Balgraums (6) angeordnet. Der Innenraum des Abrollkolbens (10) ist beispielsweise mit dem Balgraum (6) über die Durchbrüche bzw. Öffnungen (15) verbunden.

Die Funktionen der Linearführung und der Mitnahme zwischen dem Abrollkolben (10) und der Außenglocke (30) können auch getrennt sein. So kann beispielsweise ein separates Schiebepaar, z.B. zwei miteinander formschlüssige Linearführungsprofile, beispielsweise Polygonprofile, innerhalb oder außerhalb des Hydrofederbeins angeordnet sein.

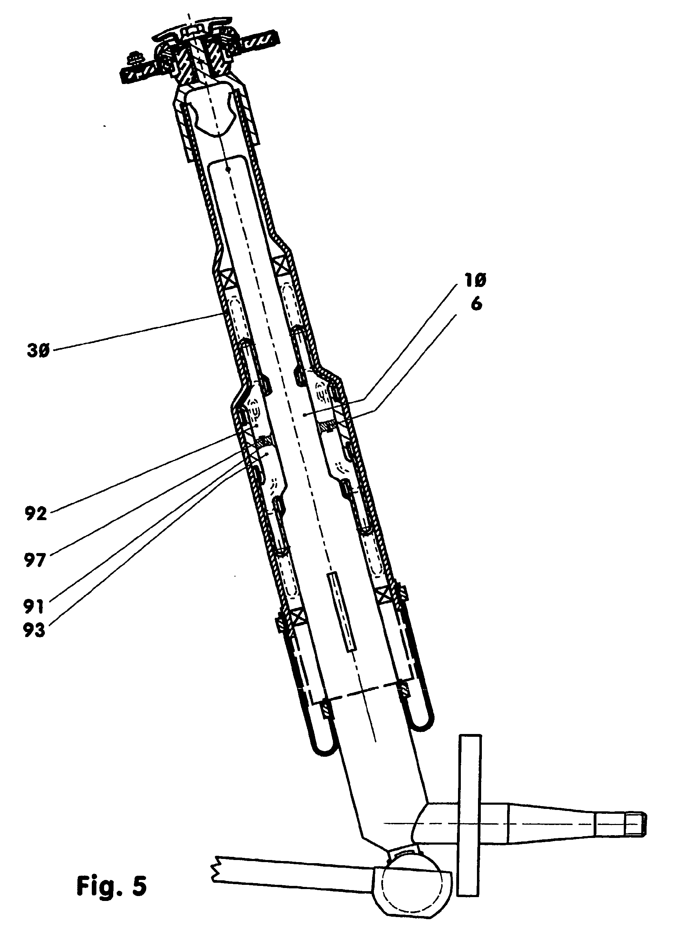

Die Figur 5 zeigt das in Figur 1 dargestellte Federbein als Gasfederbein mit einem innenliegenden Gasspeicher. Der Balgraum (6) wird durch ein Trennelement (91) in einen oberen (92) und einen unteren Teilraum (92) geteilt. Das Trennelement (91) ist hier beispielsweise mit der Außenglocke (30) verbunden und gegenüber dem Abrollkolben (10) in Längsrichtung beweglich, wobei es an diesem beispielsweise abdichtend anliegt. Im Trennelement (91) sind mindestens zwei einander gegenläufige Stromventile (97) angeordnet, die den oberen (92) und den unteren Teilraum (93) miteinander verbinden.

Beim Einfedern des Rades wird z.B. der obere Teilraum (91) verkleinert. Das in diesem Teilraum (91) eingeschlossene Gas wird komprimiert und über das Stromventil (97) des Trennelements (91) in den unteren Teilraum (92) verdrängt, dessen Volumen vergrößert wird. Die jeweiligen in den Teilräumen (92, 93) eingeschlossenen Gasmassen wirken bei der Volumenänderung als Feder. Sie bauen eine Gegenkraft auf, die der Verformung der Teilräume (92, 93) entgegenwirkt. Bei dieser Volumenänderung verzögert das Stromventil (97) den Gasstrom. Die durch das Einfedern erregte Schwingung des Gasfederbeins wird so gedämpft.

Von der ausgelenkten Position schwingt das System wieder in Richtung der Ausgangslage zurück, die Teilräume nehmen zumindest annähernd ihre ursprünglichen Volumina ein.

Beim Ausfedern eines Rades - der Abrollkolben (10) bewegt sich relativ zur Außenglocke (30) nach unten - ist die Strömungsrichtung des Gases umgekehrt.

Das Trennelement (91) kann auch derart aufgebaut sein, dass es am Abrollkolben (10) befestigt ist und an der Außenglocke (30) entlang gleitet.

Ein derartiger innenliegender Gasspeicher kann auch in Gasfederbeinen eingesetzt werden, die ähnlich wie die in den Figuren 3 und 4 dargestellten Hydrofederbeine aufgebaut sind. Hierbei kann das Trennelement ggf. Teil des Schiebe- (56) oder zylinderpaares (51) sein.

## Patentansprüche

1. Feder-Dämpfersystem eines McPherson-Federbeins zur Abstützung eines Rades an einem Fahrzeugaufbau, das ein Außenrohr und einen in diesem geführten Kolben umfasst, wobei der obere Teil des Federbeins am Fahrzeugaufbau gelenkig gelagert ist, während der untere Teil einen Radträger oder einen Achszapfen zur Lagerung eines Rades umfasst und mittels mindestens eines zumindest einteiligen Lenkers am Fahrzeugaufbau abgestützt ist, **dadurch gekennzeichnet,**
- **dass** das Außenrohr eine Außenglocke (30) ist,
- **dass** der Kolben ein Abrollkolben (10) ist,
- **dass** zwischen der Außenglocke (30) und dem Abrollkolben (10) mindestens ein Schlauchrollbalg (61) angeordnet ist,
- **dass** zwischen der Außenglocke (30) und dem Abrollkolben (10) zur gegenseitigen Längsführung und Übertragung einer Drehbewegung mindestens ein getriebetechnisches Schiebepaar (56) angeordnet ist, und
- **dass** die Außenglocke (30), der Abrollkolben (10) und der Schlauchrollbalg (61) zumindest abschnittsweise einen Balgraum (6) begrenzen.

2. Feder-Dämpfersystem nach Anspruch 1, **dadurch gekennzeichnet, dass** der Balgraum (6) mit einem Hydrospeicher (70) über eine Drosselstelle (77) kommuniziert.

3. Feder-Dämpfersystem nach Anspruch 1, **dadurch gekennzeichnet, dass** zwischen dem Abrollkolben (10) und der Außenglocke (30) zwei Längsführungen (51, 56) angeordnet sind, von denen mindestens eine das Schiebepaar (56) ist.

4. Feder-Dämpfersystem nach Anspruch 3, **dadurch gekennzeichnet, dass** mindestens eine der zwischen dem Abrollkolben (10) und der Außenglocke (30) angeordneten Längsführungen (51, 56) ein Zylinderpaar (51) ist.

5. Feder-Dämpfersystem nach Anspruch 4, **dadurch gekennzeichnet, dass** mindestens ein Schiebe- (56) oder Zylinderpaar (51) innerhalb des Balgraums (6) angeordnet ist.

6. Feder-Dämpfersystem nach Anspruch 4, **dadurch gekennzeichnet, dass** mindestens ein Schiebe- (56) oder Zylinderpaar (51) außerhalb des Balgraums (6) angeordnet ist.

7. Feder-Dämpfersystem nach Anspruch 1, **dadurch gekennzeichnet, dass** das Schiebepaar (56) mehrere Rollenböcke (57) umfasst, die jeweils Rollen (58) tragen, wobei die Rollen (58) in Führungsnuten (54) des Abrollkolbens (10) abwälzen.

8. Feder-Dämpfersystem nach Anspruch 1, **dadurch gekennzeichnet, dass** zwischen der Außenglocke (30) und dem Abrollkolben (10) zwei Schlauchrollbälge (61, 66) als Differenzrollbälge angeordnet sind.

9. Feder-Dämpfersystem nach Anspruch 2, **dadurch gekennzeichnet, dass** der Hydrospeicher (70) außerhalb der Außenglocke (30) angeordnet ist.

10. Feder-Dämpfersystem nach Anspruch 1, **dadurch gekennzeichnet, dass** die gelenkige Lagerung (80) ein 4-Punkt-Drahtlager (81) umfasst.

11. Feder-Dämpfersystem nach Anspruch 1, **dadurch gekennzeichnet, dass** der Balgraum (6) durch ein Trennelement (91), das an einem der beiden zueinander bewegten Teile (10, 30) befestigt ist und am jeweils anderen abdichtend anliegt, in zwei Teilräume (92, 93) geteilt ist, die über mindestens zwei gegenläufige Stromventile (97) kommunizieren.

## Claims

1. Spring damper system of a McPherson strut for the support of a wheel on a vehicle body, comprising an outer tube and a piston guided therein, wherein the upper part of the strut is hinged to the vehicle body, while the lower part comprises a hub carrier or stub axle and is supported on the vehicle body by means of at least one at least single-piece suspension link, **characterised in that**
- the outer tube is an outer bell (30);
- the piston is a rolling piston (10);
- at least one tubular air bellows (61) is provided between the outer bell (30) and the rolling piston (10);
- at least one gear-technology sliding pair (56) is provided between the outer bell (30) and the rolling piston (10) for mutual longitudinal guidance and for the transmission of a rotary movement; and
- the outer bell (30), the rolling piston (10) and the tubular air bellows (61) bound at least a section of a bellows chamber (6).

2. Spring damper system according to claim 1, **characterised in that** the bellows chamber (6) communicates with a hydraulic reservoir (70) via a restrictor (77).

3. Spring damper system according to claim 1, **characterised in that** two longitudinal guides (51, 56) are provided between the rolling piston (10) and the outer bell (30), at least one of which is the sliding pair (56).

4. Spring damper system according to claim 3, **characterised in that** at least one of the longitudinal guides (51, 56) between the rolling piston (10) and the outer bell (30) is a cylinder pair (51).

5. Spring damper system according to claim 4, **characterised in that** at least one sliding pair (56) or cylinder pair (51) is disposed within the bellows space (6).

6. Spring damper system according to claim 3, **characterised in that** at least one sliding pair (56) or cylinder pair (51) is disposed outside the bellows space (6).

7. Spring damper system according to claim 1, **characterised in that** the sliding pair (56) includes a plurality of brackets (57) supporting rollers (58), the rollers (58) rolling in guide grooves (54) of the rolling piston (10).

8. Spring damper system according to claim 1, **characterised in that** two tubular air bellows (61, 66) are provided as differential air bellows between the outer bell (30) and the rolling piston (10).

9. Spring damper system according to claim 2, **characterised in that** the hydraulic reservoir (70) is disposed outside the outer bell (30).

10. Spring damper system according to claim 1, **characterised in that** the hinge mounting arrangement (80) includes a 4-point wire bearing (81).

11. Spring damper system according to claim 1, **characterised in that** the bellows chamber (6) is divided into two part-chambers (92, 93) communicating via at least two flow control valves (97) operating in opposite directions by a separating element (91) secured to one of the two mutually moving parts (10, 30) and bearing against the other while forming a seal.

## Revendications

1. Système d'amortisseur-ressort d'une jambe de suspension McPherson destiné à soutenir une roue au niveau de la carrosserie d'un véhicule qui comprend un tube extérieur et un piston guidé dans celui-ci, la partie supérieure de la jambe de suspension étant montée de façon articulée sur la carrosserie du véhicule, tandis que la partie inférieure comprend un support de roue ou un tourillon destiné à loger une roue et est supportée au niveau de la carrosserie du véhicule au moyen d'au moins une bille au moins d'un seul tenant, **caractérisé en ce**
■ **que** le tube extérieur est une cloche extérieure (30),
■ **que** le piston est un piston de déroulement (10),
■ **qu'**au moins un vérin à soufflet extensible (61) est disposé entre la cloche extérieure (30) et le piston de déroulement (10),
■ **qu'**au moins un joint coulissant à technique d'engrenages (56) est disposé entre la cloche extérieure (30) et le piston de déroulement (10) pour un guidage longitudinal réciproque et la transmission d'un mouvement de rotation, et
■ **que** la cloche extérieure (30), le piston de déroulement (10) et le vérin à soufflet extensible (61) limitent au moins par sections un secteur de soufflet (6).

2. Système d'amortisseur-ressort selon la revendication 1, **caractérisé en ce que** le secteur de soufflet (6) communique avec un accumulateur hydraulique (70) via un point d'étranglement (77).

3. Système d'amortisseur-ressort selon la revendication 1, **caractérisé en ce que** deux guidages longitudinaux (51, 56) sont disposés entre le piston de déroulement (10) et la cloche extérieure (30), au moins un des deux guidages étant le joint coulissant (56).

4. Système d'amortisseur-ressort selon la revendication 3, **caractérisé en ce qu'**au moins un des guidages longitudinaux (51, 56) disposés entre le piston de déroulement (10) et la cloche extérieure (30) est une paire cylindrique (51).

5. Système d'amortisseur-ressort selon la revendication 4, **caractérisé en ce qu'**au moins un joint coulissant (56) ou une paire cylindrique (51) est disposé(e) dans le secteur de soufflet (6).

6. Système d'amortisseur-ressort selon la revendication 4, **caractérisé en ce qu'**au moins un joint coulissant (56) ou une paire cylindrique (51) est disposé(e) en dehors du secteur de soufflet (6).

7. Système d'amortisseur-ressort selon la revendication 1, **caractérisé en ce que** le joint coulissant (56) comprend plusieurs supports à galets (57) qui supportent respectivement des galets (58), les galets (58) roulant dans les rainures de guidage (54) du piston de déroulement (10).

8. Système d'amortisseur-ressort selon la revendication 1, **caractérisé en ce que** deux vérins à soufflet extensible (61, 66) sont disposés comme vérins à soufflet différentiel entre la cloche extérieure (30) et le piston de déroulement (10).

9. Système d'amortisseur-ressort selon la revendication 2, **caractérisé en ce que** l'accumulateur hydraulique (70) est disposé en dehors de la cloche extérieure (30).

10. Système d'amortisseur-ressort selon la revendication 1, **caractérisé en ce que** le logement articulé (80) comprend une rainure d'isolateur à 4 points (81).

11. Système d'amortisseur-ressort selon la revendication 1, **caractérisé en ce que** le secteur de soufflet (6) est divisé en deux secteurs partiels (92, 93), qui communiquent via au moins deux régulateurs de débit contraires (97), par un élément séparateur (91) qui est attaché à une des deux parties mobiles l'une par rapport à l'autre (10, 30) et plaquées l'une contre l'autre de façon étanche.
